# EUROPEAN PATENT SPECIFICATION

(11) **EP 1 503 095 B1**
(45) Date of publication and mention of the grant of the patent: **17.05.2006**
(21) Application number: 03102382.3
(22) Date of filing: 31.07.2003
(51) Int. Cl.: F16C 11/04, F16C 11/10, B62B 7/08

(54) **Locking system and baby buggy provided therewith**
Verschlusssystem und Kinderwagen mit einem solchen System
Système de verrouillage et voiture d'enfant avec un tel système

(43) Date of publication of application: 02.02.2005
(73) Proprietor: All Our Kids Europe B.V., 6224 LJ Maastricht (NL)
(72) Inventor: de Vrede, Camille, 6225 AM, Maastricht (NL); Meijs, Ronald Jozef Maria, 6213 BA, Maastricht (NL); Otten, Bastjan, 6212 GB, Maastricht (NL); Houben, Johannes Marcel, 6181 GX, Elsloo (NL)
(74) Representative: Voncken, Bartholomeus Maria Ch.

(56) References cited:
- FR-A- 2 567 472
- US-A- 4 170 792
- US-A- 4 280 716
- US-A- 5 257 799

## Description

The invention relates to a locking system for objects rotating around a common axis of rotation according to the preamble of claim 1, such as shown by FR 2 567 472 A.» Preferably, the locking system according to the present invention is meant for collapsible structures, such as baby buggies, folding chairs, folding bikes etc., which can be moved between an extended position of use and a collapsed storage or transport position. It is noted however, that the locking system according to the present invention is not limited to such a specific use.

It is an object of the present invention to provide a novel locking system with good characteristics.

In accordance with the present invention there is provided a locking system for objects rotating around a common axis of rotation, wherein a first of said objects is provided firstly with a longitudinal shaft defining said axis of rotation and secondly with a central part connected to, surrounding and extending perpendicularly to said shaft, in which central part a circular channel extends concentrically with the shaft over less than 360°, wherein further each of said other objects is rotatably positioned on said shaft and comprises a projection extending in parallel to the shaft and into the circular channel, the combined angular extension of the projections of all said other objects being less than the angular extension of the channel, and wherein a locking pin is provided which is movable between a locking position in which it occupies the remainder of the channel not occupied by said projections and a free position in which it is withdrawn from said channel.

When the locking pin occupies its free position, the projections of said other objects can move in the channel of the central part of the first object. Thus, the objects can rotate relative to each other around the shaft. For example, such a rotation leads to extending or collapsing a collapsible structure. However, when the locking pin has assumed its locking position, the channel of the central part is completely occupied and any movement of the projections of the other objects in the channel is prevented. In other words, a rotation of the objects relative to each other is prevented.

In the above example, in the locking position of the locking pin the collapsible structure is locked in one of the extreme positions, that is its collapsed position or its extended position, whatever the case may be. When the collapsible structure is a baby buggy, the locking position of the locking pin generally will correspond with the fully extended position of the baby buggy, for example. After moving the locking pin towards its free position, the baby buggy can be collapsed to assume a storage or transport position.

Other fields of use for a locking system in accordance with the present invention are rollators, shopping carts and wheelchairs.

As mentioned above, the locking system in accordance with the present invention is provided with a locking pin which is movable between a locking position and a free position. Such a movement of the locking pin can be realised in different manners. For example, a movement of the locking pin in a radial direction (relative to the shaft) is possible. However, in a preferred embodiment of the locking system in accordance with the present invention, the locking pin extends and is movable in parallel to the shaft. As a result, the locking pin does not add much to the outer dimensions of the locking system. Further, such a positioning of the locking pin offers the possibility of combining the locking pin in some way or another with the shaft.

When the locking system is used for locking at least thee objects, at least one of the other objects is provided with a passage for the locking pin and/or the projection of the remaining other object. Some of the possibilities will be elucidated for a locking system having a first object and two other objects. When both other objects are positioned at the same side of the first object, whereas the locking pin is mainly positioned at the opposite side of the first object, only the centrally positioned other object should have a passage for the projection of the outermost other object. When, however, in such a case the locking pin is positioned at the same side of the first object as the other objects, said other objects both should have a passage which is also big enough for accommodating the locking pin. When, in another embodiment, the other objects are positioned at opposite sides of the first object, only the other object at that side at which also the locking pin is positioned should be provided with a passage for the locking pin.

It is noted, that the passages mentioned should have a circular extension big enough for allowing the objects to rotate between the extreme positions (fully collapsed/fully extended) in the absence of the locking pin.

In the preferred embodiment of the locking system in accordance with the present invention it comprises three objects of which said first object is sandwiched between the remaining two objects. As a result the projections of the remaining two objects can directly engage in the circular channel of the central part of the first object. Only one of the said remaining two objects then has to be provided with a passage for the locking pin.

In still a further preferred embodiment of the locking system in accordance with the present invention, the locking pin has a tapering defined by two in opposite sense helically extending side surfaces, wherein the objects engaged by the locking pin have likewise helically extending engagement surfaces cooperating therewith in the locking position of the locking pin.

When the locking pin moves into the channel it will progressively engage said engagement surfaces of the objects with its tapering. As a result any play between the objects and the locking pin will be eliminated in a progressive manner. The movement of the locking pin will stop, when all play is eliminated and a vibrationless locking occurs. The helical shape of the side surfaces of the locking pin and of the corresponding engagement surfaces of the objects always results in a full surface engagement between these parts. Such a full surface engagement cannot be realised when the locking pin (and corresponding objects) just have a simple conical shape.

In a preferred embodiment of the locking system in accordance with the present invention the locking pin is part of a worm gear assembly which further comprises an operating part concentrically and rotatably mounted on said shaft in such a manner, that a rotation of the operating part causes a linear movement of the locking pin in parallel to the shaft.

Such a worm gear assembly is very effective in converting a rotating motion (of the operating part) into a translational (linear) movement (of the locking pin). For example, the locking pin can be provided with a channel extending helically around the shaft, whereas the operating part is provided with a pin or likewise helically extending projection engaging the channel in the locking pin.

Preferably, the operating part is a cylindrical sleeve at least partially surrounding the locking pin. The operating part may be provided with a grip for manually operating the operating part.

For a safe use of the locking system in accordance with the present invention, the locking pin preferably is spring loaded towards its locking position. That means, that the locking pin will automatically assume its locking position when the objects have assumed the corresponding relative position. One possibility for realising such an embodiment is, that a torsion spring is provided loading the operating part. The torsion spring may be positioned between the operating part and one of the objects, or between the operating part and the shaft.

A special embodiment of the locking system in accordance with the present invention is the one, in which it is combined with a similar mirror-imaged locking system, wherein the shafts of both locking systems are united, the operating parts of both locking systems are connected to each other and wherein the assembly of connected operating parts and corresponding locking pins is movable in the longitudinal direction of the united shafts.

As a way of speaking, a twin locking system is provided of which both locking systems are operated synchronously. Because the assembly of connected operating parts and corresponding locking pins is movable in the longitudinal direction of the united shafts, such an assembly always can assume a position, in which both locking systems are fully locked (without any remaining play).

The invention also relates to a baby buggy provided with a locking system according to the present invention, wherein there are three objects which are a forward wheel support, a rear wheel support and a pushing bar support, respectively. In the locked position of the locking pin the forward wheel support is directed forwardly and downwardly from the shaft, the rear wheel support is directed rearwardly and downwardly from the shaft and the pushing bar support is directed upwardly and rearwardly from the shaft. When the locking pin is released (is moved towards its free position) the forward wheel support, rear wheel support and pushing bar support may be rotated relative to each other to assume a storage or transport position (in which they are, for example, aligned).

Preferably, in such a baby buggy in accordance with the present invention the pushing bar support is sandwiched between the forward wheel support and the rear wheel support.

Hereinafter the invention will be elucidated referring to the drawings, in which an embodiment of the locking system in accordance with the present invention is illustrated.
Fig. 1 shows, schematically, a frame of a baby buggy incorporating an embodiment of the locking system according to the present invention;
Fig. 2 shows, on a larger scale, a perspective view of a detail of the locking system provided in Fig. 1;
Fig. 3 shows, in a schematic side view, two positions of the locking system according to Fig. 2;
Fig. 4 shows a perspective view of a locking pin;
Fig. 5 shows in a perspective view the operation of the locking pin, and
Fig. 6 shows in a perspective view a twin locking system in accordance with the present invention.

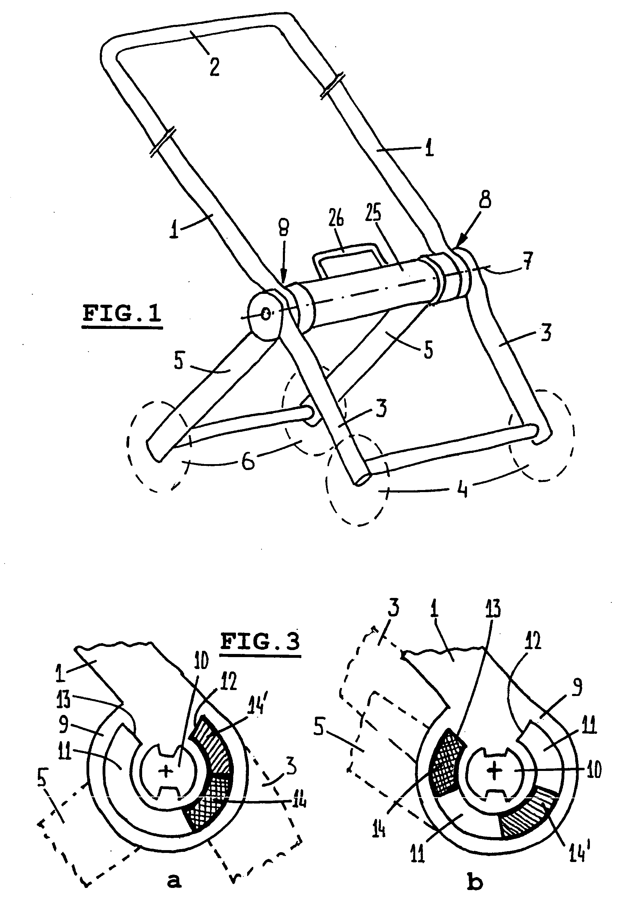

One of the possible fields of application of the locking system according to the present invention is a baby buggy, of which an example is illustrated in Fig. 1. Fig. 1 only shows the basic frame of the baby buggy which is collapsible between a fully extended position as illustrated in Fig. 1 an a collapsed position (not shown) for storage or transport.

Basically the frame of the baby buggy comprises a pushing bar support 1 for a pushing bar 2 (and for carrying a chair, not illustrated, for a child), a forward wheel support 3 for forward wheels 4 and a rear wheel support 5 for rear wheels 6. The pushing bar support 1, forward wheel support 3 and rear wheel support 5 are mounted on a common axis of rotation 7 and can rotate therearound relative to each other for obtaining any position between the fully extended and fully collapsed position.

It is noted, that the baby buggy frame illustrated in Fig. 1 comprises two similar but mirror imaged locking systems 8 in accordance with the present invention.

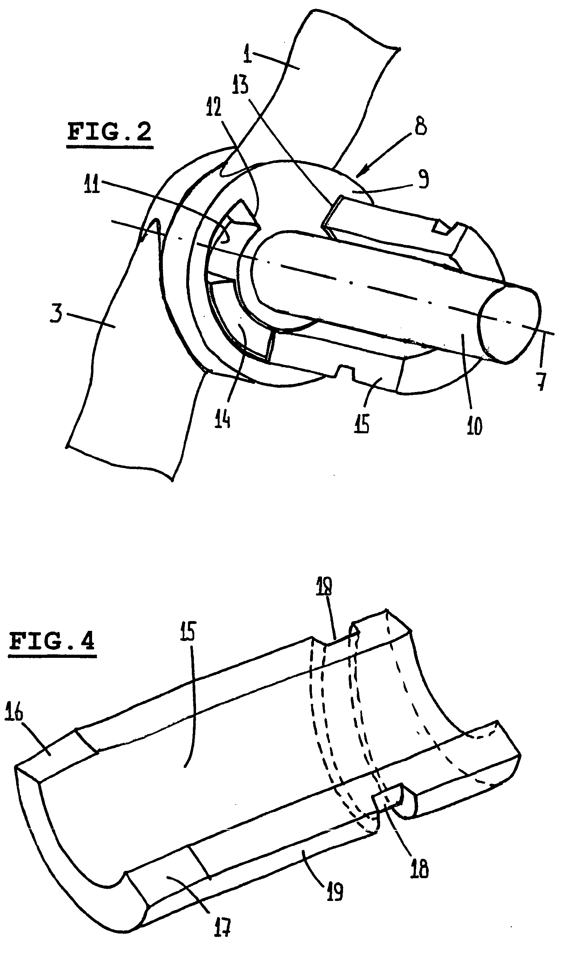

Referring to Fig. 2, one of the locking systems 8 is partly illustrated in a perspective view and on a lager scale. The pushing bar support 1 comprises a central part 9 which is attached to, surrounds and extends perpendicularly to a longitudinal shaft 10 which defines the axis of rotation 7.

In the central part 9 of the pushing bar support 1 a circular channel 11 is provided which extends concentrically with the shaft 10 over less than 360° (in the embodiment illustrated in Fig. 2 between the channel limits 12 and 13).

Fig. 2 further shows the forward wheel support 3 which, in a rotatable manner, is mounted on the shaft 10. The forward wheel support 3 comprises a projection 14 extending in parallel to the shaft 10 and into the circular channel 11. Of course, the curvature of the projection 14 corresponds with the curvature (radius) of the circular channel 11.

In Fig. 2 the forward wheel support 3 is positioned at the far side of the central part 9 of the pushing bar support 1. In a corresponding manner, however not shown for illustrational purposes, the rear wheel support 5 is positioned at the near side of the central part 9. This rear wheel support 5 is likewise provided with a projection (figure 3: 14') which extends in parallel to the shaft 10 and into the circular channel 11 (alongside the projection 14 of the forward wheel support 14, but in an opposite sense).

The combined angular extension of the projections 14 and 14' of the forward wheel support 3 and rear wheel support 5 is less than the angular extension of the channel 11 (as defined between the channel limits 12 and 13), see figure 3.

As a result, a rotation of the forward wheel support 3 and rear wheel support 5 relative to the pushing bar support 1 around the shaft 10 (or axis of rotation 7) is possible. This is schematically indicated in Fig. 3.

Fig. 3, which shows two side views in different positions of a locking system in accordance with the present invention, illustrates in Fig. 3A a fully extended position (which corresponds with Fig. 1). In the illustrated position the projection 14 of the forward wheel support 3 abuts against the channel limit 12. The projection 14' of the rear wheel support 5 abuts the projection 14 of the forward wheel support 3. Fig. 3A clearly illustrates, that the combined angular extension of the projections 14 and 14' is less than the angular extension of the channel 11. As will be elucidated later, the remaining part of the circular channel 11 not occupied by the projections 14 and 14' will be occupied by a locking pin, so that in Fig. 3A the fully extended position will be locked and a relative rotation between the pushing bar support 1, forward wheel support 3 and rear wheel support 5 will be prevented.

Fig. 3B shows a possible collapsed position. The rear wheel support 5 has been rotated around the shaft 10 until its projection 14' has come into abutment with the channel limit 13 of the channel 11. The forward wheel support 3 has been rotated around the shaft 10 towards a position substantially aligned with the pushing bar support 1 and rear wheel support 5. The projection 14 of the forward wheel support 3 than is positioned somewhere between the projection 14' and the channel limit 12.

Again referring to Fig. 2 a locking pin 15 is illustrated. This locking pin 15 is movable between a locking position (illustrated in Fig. 2) in which it occupies the remainder of the channel 11 not occupied by the projections 14 and 14', and a free position in which it is withdrawn from said channel 11 (in Fig. 2 this means a movement to the right). In the free position of the locking pin 15 a rotation of the locking system is allowed (for example as illustrated in Fig. 3B).

It is noted, that in the embodiment described the central part 9 of the pushing bar support 1 is sandwiched between the forward wheel support 3 and rear wheel support 5 (or central parts thereof positioned around the shaft 10). However, it is also possible, that both the forward wheel support 3 and rear wheel support 5 are positioned at the same side of the central part 9 of the pushing bar support 1. In such a case, however, in at least one of the forward wheel support 3 and rear wheel support 5 a passage for the locking pin 15 and/or the projection 14 or 14' of the remaining one of the forward wheel support 3 and rear wheel support 5 should be provided. In the embodiment illustrated in the figures, such a passage for the locking pin 15 should be provided in the rear wheel support 5.

The locking pin 15 will be explained further referring to Fig. 4. As illustrated, the locking pin 15 extends and is movable in parallel to the shaft 10 (axis of rotation 7). Because the locking pin 15 has to be positioned in the circular channel 11, it also has a corresponding partly circular or cylindrical shape. At its end which has to be positioned in the channel 11 the locking pin 15 has a tapering defined by two side surfaces 16 and 17 which extend helically in opposite sense. In a corresponding manner (but not shown) the channel limit 13 engaged by the side surface 16 and the edge of the projection 14 (or 14', whatever the case may be) engaged by the side surface 17 are provided with helically extending engagement surfaces. Due to the helical shape of said surfaces the locking pin 15 will always engage the cooperating surfaces of the central part 9 and projection 14 (14') with a full surface contact, instead of a line contact or point contact.

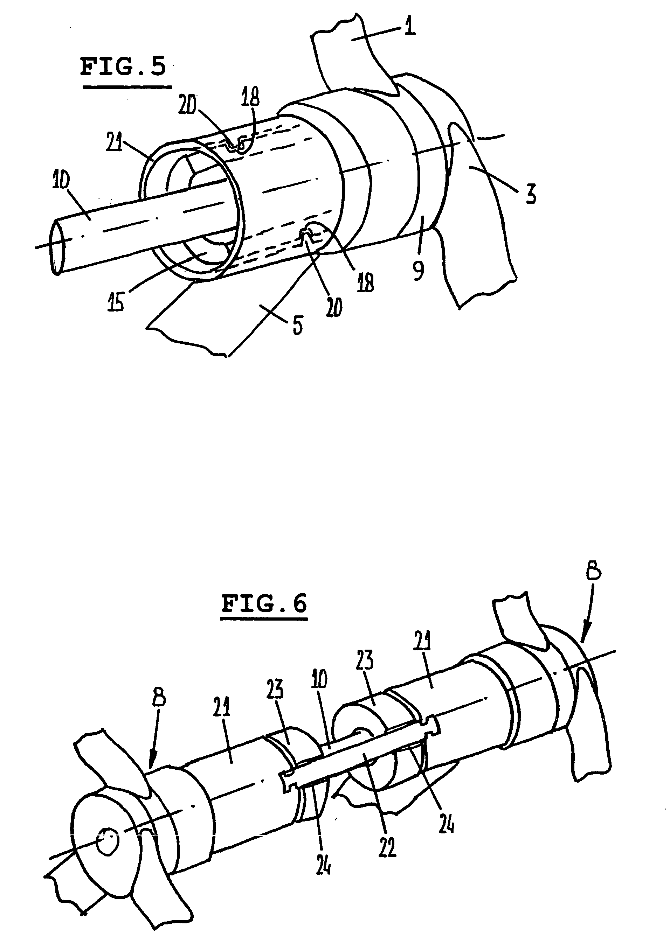

In a manner and with means not shown in detail the locking pin 15 is obstructed in a rotation relative to the central part 9. Only a longitudinal movement in parallel to the shaft 10 is allowed. For realising such a movement the locking pin 15 is provided with a channel 18 in its outer surface 19. Said channel 18 extends helically. This helically extending channel 18 cooperates with an inwardly extending projection 20 of a cylindrical operating part 21 which is concentrically and rotatably mounted on the shaft 10 (Fig. 5). The projection 20 of the operating part 21 extends likewise helically (such that a rotation of the operating part 21 leads to a translational movement of the locking pin 15 in parallel to the shaft 10; in a way, the locking pin 15 and operating part 21 together define a worm gear assembly).

In the embodiment illustrated in Fig. 5 the operating part 21 is a cylindrical sleeve which surrounds the locking pin 15. In a manner not shown in detail, this cylindrical sleeve or operating part 21 is substantially restricted in a motion in parallel to the shaft 10; only a rotation around the shaft 10 is allowed.

Preferably, the locking pin 15 is springloaded towards its locking position as illustrated in Fig. 2. In the embodiment with the operating part 21 according to Fig. 5, such a springload could be obtained by providing a torsion spring between the cylindrical sleeve 21 and, for example, the rear wheel support 5.

Finally, reference is made to Fig. 6. Two locking systems 8 (as in Fig. 1) share a common shaft 10. Each locking system 8 comprises an operating part or sleeve 21 which, in correspondence with Fig. 5, drives a locking pin 15 (not visible in Fig. 6). For a synchronisation between both locking systems 8 one or more connecting members 22 connects the operating parts 21. The assembly comprising interconnected operating parts 21 and cooperating locking pins 15 is in its entirety axially movable along the shaft 10 in a limited way. Thus, when the operating parts 21 are operated for moving the locking pins 15 into the locking position, a slight longitudinal adjustment of said assembly is possible when one of the locking pins 15 has reached its extreme position before the other locking pin has done so. To allow such a longitudinal or axial movement of said assembly, sleeves 23 are provided which cannot slide longitudinally relative to the shaft 10 but which can rotate around the shaft 10. Each sleeve 23 comprises in its surface a recess 24 for slidingly accommodating the connecting member 22. An outer cylinder 25 (Fig. 1) can be connected to the sleeves 23 for surrounding the entire assembly between the locking systems 8. Such an outer cylinder 25 can be provided with a grip 26 for manually operating the entire system, for example for moving the locking pins 15 from the springloaded locking position towards a free position. This means rotating the outer cylinder 25 and thus the sleeves 23 and as a result, by means of the connecting member 22, the operating parts 21 which then cause a longitudinal movement of the locking pins 15 in parallel to the shaft 10 and, if needed, a longitudinal shift of the entire assembly comprising the operating parts 21 and locking pins 15.

When such an outer cylinder 25 with grip 26 is applied an additional safety feature can be realised. When the pushing bar support 1 supports a chair for a child, such a chair (not shown) can prevent a movement of the grip 26 and thus a rotation of the cylinder 25. Only after removal of the chair a rotation of the outer cylinder would be possible. Thus, inadvertently collapsing the structure when the chair (and a child!) is present, is not possible.

The invention is not limited to the embodiments described before which can be varied widely within the scope of the invention as defined by the appending claims. Although in the illustrated embodiments three objects can rotate relative to each other (i.e. the pushing bar support 1, forward wheel support 3 and rear wheel support 5) also a different number of objects could be provided rotating relative to each over. Further, although in the illustrated embodiments the locking system is provided in a baby buggy, also a provision in different structures is conceivable, such as a collapsible chair, folding bike, rollator, shopping cart, wheelchair etc. Finally, in the illustrated embodiments the locking pin 15 is movable in a direction parallel to the shaft 10. However, it is feasible too that the locking pin is movable in a radial direction. For example, the locking pin 15 can be integrated in such a case in the central part 9 of the pushing bar support 1.

## Claims

1. Locking system for objects rotating around a common axis of rotation, wherein a first of said objects is provided firstly with a longitudinal shaft (10) defining said axis (7) of rotation and secondly with a central part (9) connected to, surrounding and extending perpendicularly to said shaft (10), in which central part (10) a circular channel (11) extends concentrically with the shaft over less than 360°, wherein further each of said other objects is rotatably positioned on said shaft (10) and comprises a projection (14,14') extending in parallel to the shaft (10) and into the circular channel (11), the combined angular extension of the projections (14,14') of all said other objects being less than the angular extension of the channel (11), **characterized in that** a locking pin (15) is provided which is movable between a locking position in which it occupies the remainder of the channel (11) not occupied by said projections (14,14') and a free position in which it is withdrawn from said channel (11).

2. Locking system according to claim 1, wherein the locking pin extends and is movable in parallel to the shaft.

3. Locking system according to claim 2, for locking at least three objects, wherein at least one of the other objects is provided with a passage for the locking pin and/or the projection of the remaining other object.

4. Locking system according to any of the previous claims, comprising three objects of which said first object is sandwiched between the remaining two objects.

5. Locking system according to claim 2, 3 or 4, wherein the locking pin has a tapering defined by two in opposite sense helically extending side surfaces and wherein the objects engaged by the locking pin have likewise helically extending engagement surfaces cooperating therewith in the locking position of the locking pin.

6. Locking system according to one of the claims 2-5, wherein the locking pin is part of a worm gear assembly which further comprises an operating part concentrically and rotatably mounted on said shaft in such a manner, that a rotation of the operating part causes a linear movement of the locking pin in parallel to the shaft.

7. Locking system according to claim 6, wherein the operating part is a cylindrical sleeve at least partially surrounding the locking pin.

8. Locking system according to any of the claims 2-7, wherein the locking pin is springloaded towards its locking position.

9. Locking system according to claim 6 and, 7 wherein a torsion spring is provided loading the operating part.

10. Locking system according to claim 6 or 7, combined with a similar mirror-imaged locking system, wherein the shafts of both locking systems are united, the operating parts of both locking systems are connected to each other and wherein the assembly of connected operating parts and corresponding locking pins is movable in the longitudinal direction of the united shafts.

11. Baby buggy provided with a locking system according to any of the previous claims, wherein there are three objects which are a forward wheel support, a rear wheel support and a pushing bar support, respectively.

12. Baby buggy according to claim 11, wherein the pushing bar support is sandwiched between the forward wheel support and the rear wheel support.

## Patentansprüche

1. Arretierungssystem für Objekte, die sich um eine gemeinsame Drehachse drehen, wobei ein erstes dieser Objekte erstens mit einer Längsachse (10), die die Drehachse (7) definiert, und zweitens mit einem mittigen Teil (9) versehen ist, welches mit der Achse (10) verbunden ist, die Achse (10) umschließt und sich senkrecht zu der Achse (10) erstreckt, in welchem mittigen Teil (10) sich ein ringförmiger Kanal (11) konzentrisch mit der Achse über weniger als 360° erstreckt, wobei ferner jedes der anderen Objekte auf dieser Achse (10) drehbar angeordnet ist und einen Vorsprung (14, 14') aufweist, der sich parallel zu der Achse (10) und in den ringförmigen Kanal (11) hinein erstreckt, wobei die kombinierte Winkelerstreckung der Vorsprünge (14, 14') aller anderen Objekte kleiner als die Winkelerstreckung des Kanals (11) ist, **dadurch gekennzeichnet, dass** ein Arretierungsstift (15) vorgesehen ist, der zwischen einer Arretierungsposition, in welcher er den nicht durch die Vorsprünge (14, 14') in Anspruch genommenen Rest des Kanals (11) in Anspruch nimmt, und einer Freiposition, in welcher er aus dem Kanal (11) zurückgezogen ist, beweglich ist.

2. Arretierungssystem gemäß Anspruch 1, wobei sich der Arretierungsstift parallel zu der Achse erstreckt und parallel zu der Achse beweglich ist.

3. Arretierungssystem gemäß Anspruch 2, zum Arretieren von zumindest drei Objekten, wobei zumindest eines der anderen Objekte mit einem Durchgang für den Arretierungsstift und/oder den Vorsprung des verbleibenden anderen objekts versehen ist.

4. Arretierungssystem gemäß irgendeinem der vorhergehenden Ansprüche, welches drei Objekte aufweist, von welchen das erste Objekt zwischen den verbleibenden zwei Objekten eingeschoben ist.

5. Arretierungssystem gemäß Anspruch 2, 3 oder 4, wobei der Arretierungsstift eine Verjüngung aufweist, die durch zwei sich im entgegengesetzten Sinn schraubenförmig erstreckende Seitenflächen definiert ist, und wobei die Objekte, die durch den Arretierungsstift im Eingriff stehen, damit in der Arretierungsposition des Arretierungsstiftes zusammenwirkende, ebenfalls sich schraubenförmig erstreckende Eingriffsflächen aufweisen.

6. Arretierungssystem gemäß einem der Ansprüche 2-5, wobei der Arretierungsstift Teil einer Scheckengetriebeanordnung ist, welche ferner ein Bedienteil aufweist, das konzentrisch und drehbar auf der Achse derart befestigt ist, dass eine Rotation des Bedienteils eine Linearbewegung des Arretierungsstiftes parallel zu der Achse bewirkt.

7. Arretierungssystem gemäß Anspruch 6, wobei das Bedienteil eine zylindrische Buchse ist, die den Arretierungsstift zumindest teilweise umschließt.

8. Arretierungssystem gemäß irgendeinem der Ansprüche 2-7, wobei der Arretierungsstift in Richtung seiner Arretierungsposition federbelastet ist.

9. Arretierungssystem gemäß Anspruch 6 und 7, wobei eine Torsionsfeder vorgesehen ist, die das Bedienteil belastet.

10. Arretierungssystem gemäß Anspruch 6 oder 7, das mit einem gleichartigen spiegelbildlichen Arretierungssystem kombiniert ist, wobei die Achsen von beiden Arretierungssystemen vereinigt sind, die Bedienteile beider Arretierungssysteme miteinander verbunden sind und wobei die Anordnung der verbundenen Bedienteile und der zugehörigen Arretierungsstifte in der Längsrichtung der vereinigten Achsen beweglich ist.

11. Kinderwagen, der mit einem Arretierungssystem gemäß irgendeinem der vorhergehenden Ansprüche versehen ist, wobei es drei Objekte gibt, welche eine Vorderradstütze, eine Hinterradstütze beziehungsweise eine Schiebestangenstütze sind.

12. Kinderwagen gemäß Anspruch 11, wobei die Schiebestangenstütze zwischen der Vorderradstütze und der Hinterradstütze eingeschoben ist.

## Revendications

1. Système de verrouillage pour objets tournant autour d'un axe commun de rotation, dans lequel un premier desdits objets est doté tout d'abord avec un arbre longitudinal (10) définissant ledit axe (7) de rotation et deuxièmement d'une partie centrale (9) connectée, entourant et s'étendant perpendiculairement audit arbre (10), dans la partie centrale (10) duquel un canal circulaire (11) s'étend de manière concentrique avec l'arbre sur moins de 360°, dans lequel en outre chacun desdits autres objets est positionné en rotation sur ledit arbre (10) et comprend une projection (14, 14') s'étendant parallèlement à l'arbre (10) et dans le canal circulaire (11), l'extension angulaire combinée des projections (14, 14') de tous lesdits autres objets étant inférieure à l'extension angulaire du canal (11), **caractérisé en ce qu'**une broche de verrouillage (15) est prévue et se déplace entre une position de verrouillage, dans laquelle elle occupe le reste du canal (11) non occupé par lesdites projections (14, 14'), et une position libre dans laquelle elle est retirée dudit canal (11).

2. Système de verrouillage selon la revendication 1, dans lequel la broche de verrouillage s'étend et se déplace parallèlement à l'arbre.

3. Système de verrouillage selon la revendication 2, pour verrouiller au moins trois objets, dans lequel au moins un des autres objets est doté d'un passage pour la broche de verrouillage et/ou la projection de l'autre objet restant.

4. Système de verrouillage selon l'une quelconque des revendications précédentes, comprenant trois objets dont ledit premier objet est pris en sandwich entre les deux objets restants.

5. Système de verrouillage selon la revendication 2, 3 ou 4, dans lequel la broche de verrouillage a un rétrécissement défini par deux surfaces latérales s'étendant de manière hélicoïdale dans un sens opposé et dans lequel les objets engagés par la broche de verrouillage ont des surfaces d'engagement s'étendant de manière similaire, de manière hélicoïdale et coopérant ensemble dans la position de verrouillage de la broche de verrouillage.

6. Système de verrouillage, selon l'une des revendications 2-5, dans lequel la broche de verrouillage fait partie d'un ensemble d'engrenage amincis qui comprennent en outre une partie opérationnelle montée de manière concentrique et en rotation sur ledit arbre, de telle sorte qu'une rotation de la partie opérationnelle provoque un mouvement linéaire de la broche de verrouillage parallèlement à l'arbre.

7. Système de verrouillage selon la revendication 6, dans lequel la partie opérationnelle est un manchon cylindrique entourant au moins partiellement la broche de verrouillage.

8. Système de verrouillage selon l'une quelconque des revendications 2 à 7, dans lequel la broche de verrouillage est chargée par ressort vers sa position de verrouillage.

9. Système de verrouillage selon les revendications 6 et 7, dans lequel un ressort de torsion est fourni en chargeant la partie opérationnelle.

10. Système de verrouillage selon la revendication 6 ou 7, combiné avec un système de verrouillage à image réfléchie similaire, dans lequel les arbres des deux systèmes de verrouillage sont unis, les parties opérationnelles des deux systèmes de verrouillage sont connectées l'une à l'autre et dans lequel l'ensemble de parties opérationnelles connectées et des broches de verrouillage correspondantes se déplace dans le sens longitudinal des arbres unis.

11. Poussette de bébé, dotée d'un système de verrouillage selon l'une quelconque des revendications précédentes, dans lequel il existe trois objets qui sont un support de roue avant, un support de roue arrière et un support de barre de poussée, respectivement.

12. Poussette de bébé selon la revendication 11, dans lequel le support de barre de poussée est pris en sandwich entre le support de roue avant et le support de roue arrière.
